# EUROPEAN PATENT APPLICATION

(11) **EP 4 383 867 A1**
(43) Date of publication of application: **12.06.2024**
(21) Application number: 21952902.1
(22) Date of filing: 06.08.2021
(51) Int. Cl.: H04W 68/02, H04W 52/02

(54) **TERMINAL**

(71) Applicant: NTT DOCOMO, INC., Tokyo 100-6150 (JP)
(72) Inventor: NAKAMURA, Takuma, Tokyo 100-6150 (JP); OHARA, Tomoya, Tokyo 100-6150 (JP)
(74) Representative: Hoffmann Eitle
(86) International application number: PCT/JP2021/029445
(87) International publication number: WO 2023/013079

(57) **Abstract**

A terminal includes: a reception unit configured to detect a paging advance notification signal; and a control unit configured to determine, based on the paging advance notification signal, availability of a reference signal for synchronization in each discontinuous reception cycle of one or more discontinuous reception cycles.

## Description

### TECHNICAL FIELD

The present invention relates to a terminal in a radio communication system.

### [Background Art]

In 3GPP (3rd Generation Partnership Project), in order to realize a further increase in system capacities, a further increase in data transmission rates, a further reduction in delays in radio sections, and the like, a radio communication scheme called 5G or NR (New Radio) (hereinafter, the radio communication scheme is referred to as "NR") is being developed. In NR, various radio technologies and network architectures have been studied in order to satisfy the requirement that the delay in a radio section be equal to or less than 10 Gbps while realizing a throughput equal to or greater than 1 ms.

In NR, as in LTE, paging is performed to call a terminal in a standby state when an incoming call arrives. In NR, a terminal in an RRC_IDLE state or an RRC_INACTIVE state performs a discontinuous reception operation for power saving in order to monitor a paging DCI (for example, Non-Patent Document 1). In the discontinuous reception operation, a period in which the terminal wakes up from a sleep state and performs paging monitoring is referred to as a paging occasion (PO). Hereinafter, a terminal in the RRC_IDLE state or the RRC_INACTIVE state may be referred to as an idle/inactive mode UE.

### Related Art Document

### Non-Patent Documents

Non-Patent Document 1: 3GPP TS 38.304 V16.1.0 (2020-07)

### SUMMARY OF THE INVENTION

### Problems to be Solved by the Invention

When an idle/inactive mode UE in the existing NR performs paging monitoring in a paging occasion (PO), the idle/inactive mode UE needs to perform reception processing of a plurality of synchronization signal blocks (SSBs) in order to perform synchronization processing such as time/frequency tracking and auto gain control (AGC) in advance.

However, since the SSB is transmitted at a relatively long cycle, the terminal needs to wake up earlier than the timing of PO reception and receive a plurality of SSBs for the SSB reception processing. Therefore, a long sleep time cannot be secured, which leads to an increase in terminal power consumption.

Although it is possible to reduce terminal power consumption by using a TRS/CSI-RS as a signal for synchronization, the TRS/CSI-RS cannot always be used as a signal for synchronization.

Therefore, there are ongoing studies to notify an idle/inactive mode UE whether or not the TRS/CSI-RS can be used as a reference signal for synchronization. As a signal for notification, a paging early indication (hereinafter referred to as PEI), a paging DCI, a SIB and the like are considered. However, since the terminal operation for the PEI is not clear, there is a problem in that power consumption of the terminal may not be appropriately reduced.

The present invention has been made in view of the above, and an object of the present invention is to provide a technique that enables appropriate reduction in power consumption of a terminal in paging monitoring.

### Means for Solving the Problems

According to the disclosed technique, there is provided a terminal including:
a reception unit configured to detect a paging advance notification signal; and
a control unit configured to determine, based on the paging advance notification signal, availability of a reference signal for synchronization in each discontinuous reception cycle of one or more discontinuous reception cycles.

### Effects of the Invention

According to the disclosed technique, a technique is provided that enables appropriate reduction in power consumption of a terminal in paging monitoring.

### Brief Description of the Drawings

[FIG. 1] FIG. 1 is a diagram for explaining a radio communication system according to an embodiment of the present invention;
[FIG. 2] FIG. 2 is a diagram for explaining a radio communication system according to an embodiment of the present invention;
[FIG. 3] FIG. 3 is a diagram illustrating an operation example for paging monitoring;
[FIG. 4] FIG. 4 is a diagram for explaining PEI.
[FIG. 5] FIG. 5 is a diagram for explaining an outline of an embodiment;
[FIG. 6] FIG. 6 is a sequence diagram showing a basic operation example;
[FIG. 7] FIG. 7 is a diagram for explaining Example 1-1;
[FIG. 8] FIG. 8 is a diagram for explaining Example 1-2;
[FIG. 9] FIG. 9 is a diagram for explaining Example 1-2;
[FIG. 10] FIG. 10 is a diagram for explaining Example 1-3.
[FIG. 11] FIG. 11 is a diagram for explaining Example 1-3;
[FIG. 12] FIG. 12 is a diagram for explaining Example 1-3;
[FIG. 13] FIG. 13 is a diagram for explaining Example 2;
[FIG. 14] FIG. 14 is a diagram for explaining Example 2;
[FIG. 15] FIG. 15 is a diagram showing an example of a functional configuration of a base station 10 according to an embodiment of the present invention;
[FIG. 16] FIG. 16 is a diagram showing an example of a functional configuration of a terminal 20 according to an embodiment of the present invention;
[FIG. 17] FIG. 17 is a diagram showing an example of a hardware configuration of the base station 10 or the terminal 20 according to an embodiment of the present invention.
[FIG. 18] FIG. 18 is a diagram showing a configuration of a vehicle.

### Detailed Description of the Invention

Hereinafter, embodiments of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing NR, but is not limited to existing NR.

In addition, in the present specification, terms used in the existing NR or LTE specifications such as PDCCH, RRC, MAC, and DCI are used, but those represented by a channel name, a protocol name, a signal name, a function name, and the like used in the present specification may be referred to by other names. Further, although it is assumed that the terminal operation in the present embodiment is an operation of a terminal in an idle/inactive mode, this is merely an example, and the technique according to the present invention may be applied to a terminal in a connected mode.

### (System Configuration)

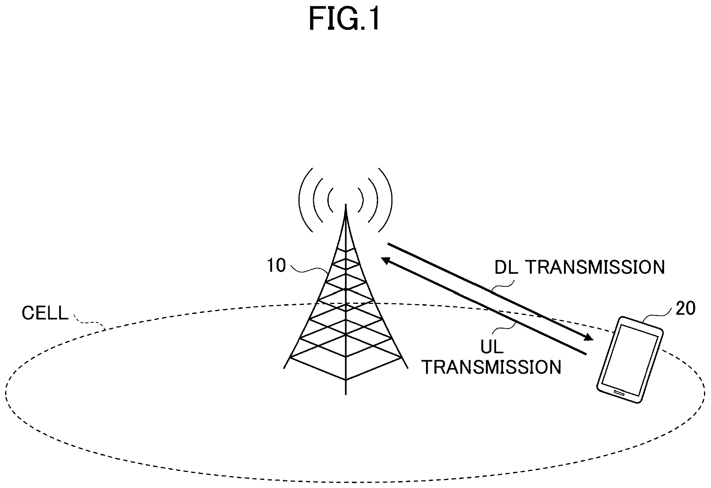

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication device that provides one or more cells and performs radio communication with the terminal 20. A physical resource of a radio signal is defined in a time domain and a frequency domain, and the time domain may be defined by the number of OFDM symbols, and the frequency domain may be defined by the number of subcarriers or the number of resource blocks. In addition, a transmission time interval (TTI) in the time domain may be a slot, or a TTI may be a subframe.

The base station 10 transmits a synchronization signal, system information, and the like to the terminal 20. The synchronization signal is, for example, an NR-PSS and an NR-SSS. The synchronization signal may be an SSB. The system information is transmitted by, for example, an NR-PBCH or a PDSCH, and is also referred to as broadcast information. As illustrated in FIG. 1, the base station 10 transmits a control signal or data to the terminal 20 in downlink (DL), and receives a control signal or data from the terminal 20 in uplink (UL). Note that, although what is transmitted in a control channel such as a PUCCH and a PDCCH is referred to as a control signal and what is transmitted in a shared channel such as a PUSCH and a PDSCH is referred to as data here, such a way of referring to is merely an example.

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 may be referred to as a UE, and the base station 10 may be referred to as a gNB.

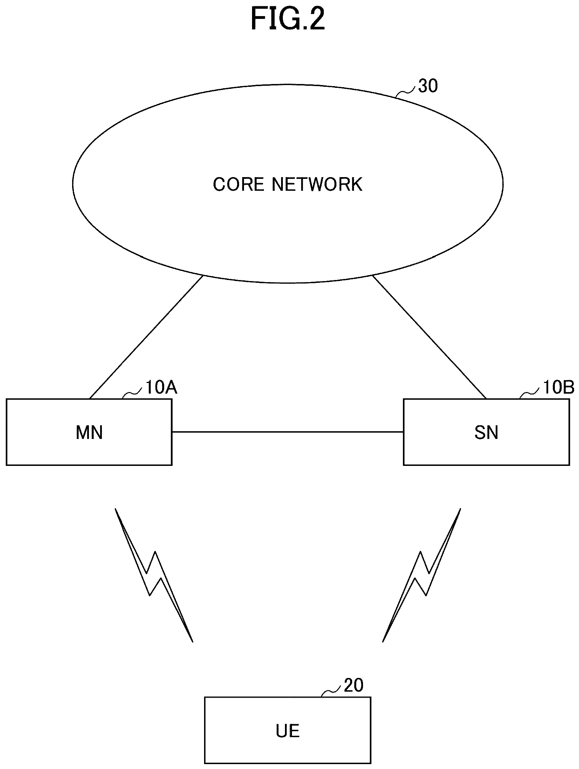

FIG. 2 illustrates a configuration example of a radio communication system in a case where dual connectivity (DC) is executed. As shown in FIG. 2, a base stations 10A as a master node (MN) and a base station 10B as a secondary node (SN) are provided. The base stations 10A and 10B are connected to a core network. The terminal 20 can communicate with both the base stations 10A and 10B.

A cell group provided by the base station 10A serving as the MN is referred to as a master cell group (MCG), and a cell group provided by the base station 10B serving as the SN is referred to as a secondary cell group (SCG).

The processing operation in the present embodiment may be executed by the system configuration shown in FIG. 1, the system configuration shown in FIG. 2, or other system configurations.

### (Paging Monitoring Operation Example, Problem)

Hereinafter, an operation example of paging monitoring in the terminal 20 will be described. In NR, as in LTE, paging is performed to call a terminal in a standby state when an incoming call arrives. In NR, the terminal 20 performs discontinuous reception operation for power saving in order to monitor a paging DCI. In the discontinuous reception operation, a period in which the terminal 20 wakes up from a sleep state and performs paging monitoring is referred to as a paging occasion (PO).

The terminals 20 monitor, for example, one PO per 1DRX cycle. The PO is composed of, for example, a plurality of slots.

As described above, when the terminal 20 performs paging monitoring in a paging occasion (PO), the terminal 20 needs to perform reception processing of a plurality of synchronization signal blocks (SSBs) in order to perform synchronization processing such as time/frequency tracking and auto gain control (AGC) in advance. The number of SSBs received in advance varies depending on the reception quality.

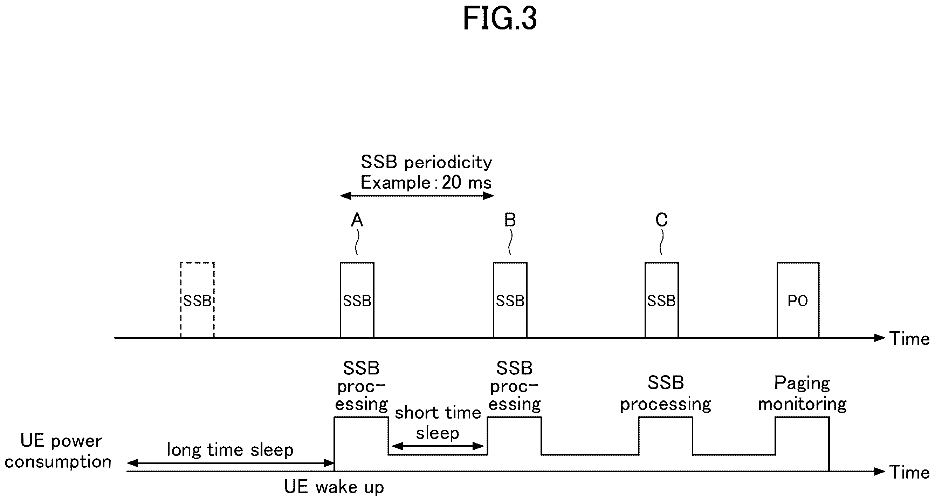

An operation example of the terminal 20 in a case where SSB reception is performed before a PO will be described with reference to FIG. 3. The upper part of FIG. 3 shows the SSB reception operation, and the lower part shows the power consumption of the terminal 20.

FIG. 3 shows an example of a case where the cycle of the SSB is 20 ms and three SSBs are received before the PO. The terminal 20 is in a sleep state for a long time before the timing of the SSB indicated by A, and wakes up at the timing of the SSB indicated by A. After the reception of the SSB indicated by A, the terminal 20 sleeps, but since the sleep is performed for a short time, some circuits need to be activated, and thus power is consumed. The SSB reception is performed in the same manner at the timings of B and C, and paging monitoring is performed at the PO.

However, since the SSB is transmitted at a relatively long cycle, the terminal 20 needs to wake up early with respect to the timing of PO reception and receive a plurality of SSBs for SSB reception processing. Therefore, a long sleep time cannot be secured, which leads to an increase in terminal power consumption. In the example of FIG. 3, the sleep must be terminated for a long time before 60 ms of the PO.

For paging monitoring, in addition to or instead of the SSB, it is possible to perform synchronization processing such as time/frequency tracking and auto gain control (AGC) by using a TRS/CSI-RS (either or both of the TRS and the CSI-RS) that is a reference signal transmitted in a shorter cycle than that of the SSB. Since the terminal 20 can establish time/frequency synchronization by one time reception of the TRS/CSI-RS, the terminal does not need to wake up a plurality of times, and thus power consumption can be suppressed.

However, the TRS/CSI-RS is a reference signal used by the terminal 20 in an RRC connected state (connected mode UE), and is not always transmitted in a cell (and a beam) in which the terminal 20 exists. For example, when there is no connected mode UE connected in the beam in the cell, the base station 10 determines that it is not necessary to transmit a TRS/CSI-RS, and may perform control not to transmit the TRS/CSI-RS.

When it is unclear whether a TRS/CSI-RS is being transmitted, the terminal 20 cannot determine in advance at which timing the terminal 20 should wake up. Therefore, as in the case of using the SSB shown in FIG. 3, it is necessary to wake up earlier than a PO by a longer time, and thus the amount of power consumption increases.

In order to avoid an increase in the power consumption amount as described above, in the present embodiment, the base station 10 notifies the terminal 20 of whether or not the TRS/CSI-RS can be used as a reference signal for synchronization. Examples of a signal (information) used for the notification include a paging DCI, a paging early indication (PEI), and a system information block (SIB).

Basic functions of the PEI will be described below. The PEI is a signal for notifying in advance whether or not the terminal 20 needs to wake up in a PO. To be more specific, a DCI-based PEI, in which reporting is carried out using a DCI, and an RS/sequence-based PEI, in which reporting is carried out using a reference signal (or a sequence), have been proposed. Note that "wake up" may be rephrased as "activate". Further, "PEI" may be rephrased as "paging advance notification signal".

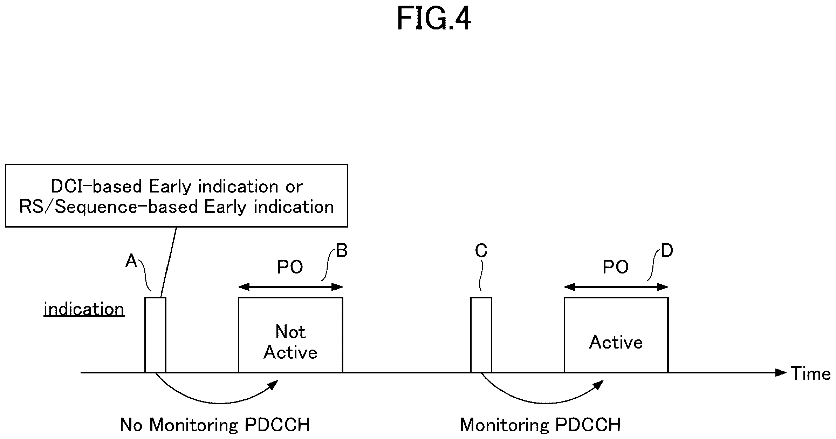

FIG. 4 is a diagram for explaining an example of terminal operation using a PEI. At the time point indicated by A in FIG. 4, when the terminal 20 receives a PEI indicating that the terminal 20 does not need to wake up in a PO, the terminal 20 does not monitor a PDCCH in the PO indicated by B. When the terminal 20 receives a PEI instructing the terminal 20 to wake up in a PO at the time point indicated by C, the terminal 20 monitors a PDCCH in the PO indicated by D. By the PEI, unnecessary PO monitoring can be avoided.

In the present embodiment, it is also possible to notify, by the PEI, whether or not the terminal 20 can use a TRS/CSI-RS as a reference signal for synchronization for paging monitoring in a PO.

However, in the related art, since the terminal operation for the PEI is not clear, there is a problem in that the power consumption of the terminal 20 may not be appropriately reduced.

### (Outline of Embodiment)

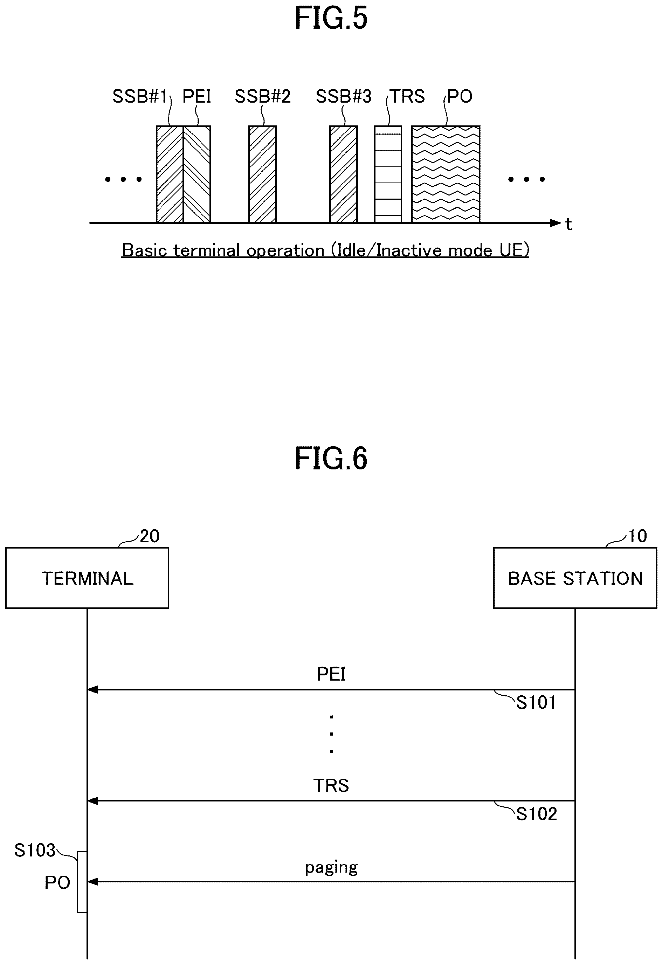

In the present embodiment, terminal operation for the PEI is clarified, and the power consumption reduction effect of the terminal 20 is improved. For example, in an example in which each signal is transmitted from the base station 10 to the terminal 20 in the timeline (diagram representing signals in time series) illustrated in FIG. 5, the terminal operation for the PEI will be clarified.

More specifically, an operation example of the terminal 20 when the PEI is detected will be described as Example 1, and an operation example of the terminal 20 when the PEI cannot be detected will be described as Example 2. Note that, although a TRS is shown below as an example of a reference signal for synchronization, the TRS is an example, and reference signals other than TRS may be used as a reference signal for synchronization. The reference signal other than the TRS may be a CSI-RS or may be a reference signal other than the CSI-RS. Further, "detect" may be replaced with "receive".

An example of a sequence will be described with reference to FIG. 6. In S101, the base station 10 transmits a PEI, and the terminal 20 receives the PEI. If the PEI notifies that a TRS can be used, the terminal 20 receives a TRS in S102 to establish synchronization, and receives paging in S103. Examples 1 and 2 will be described below. The contents described in Examples 1 and 2 can be freely combined and carried out.

In the following Examples, a case where one PO exists in one DRX cycle (discontinuous reception cycle) will be described. However, this is merely an example, and a configuration may be made such that a plurality of POs are included in one DRX cycle. Also, a configuration may be made such that a DRX cycle that does not include a PO exists.

### (Example 1)

In Example 1, an example of an operation of the terminal 20 when a PEI is detected will be described. Example 1 is divided into Examples 1-1 to 1-3, and each of them will be described.

### <Example 1-1>

In Example 1-1, availability of a TRS is notified to the terminal 20 by a PEI transmitted from the base station 10. The time range of the TRS of which the availability is to be notified by the PEI includes the following option 1 and option 2.

### <Option 1 of Example 1-1>

In option 1, by a PEI, the terminal 20 is notified of availability of only a TRS immediately before a PO in a DRX cycle in which the PEI is received by the terminal 20. That is, the base station 10 transmits the PEI including information indicating the availability of only a TRS immediately before a PO in a DRX cycle in which the base station 10 transmits the PEI.

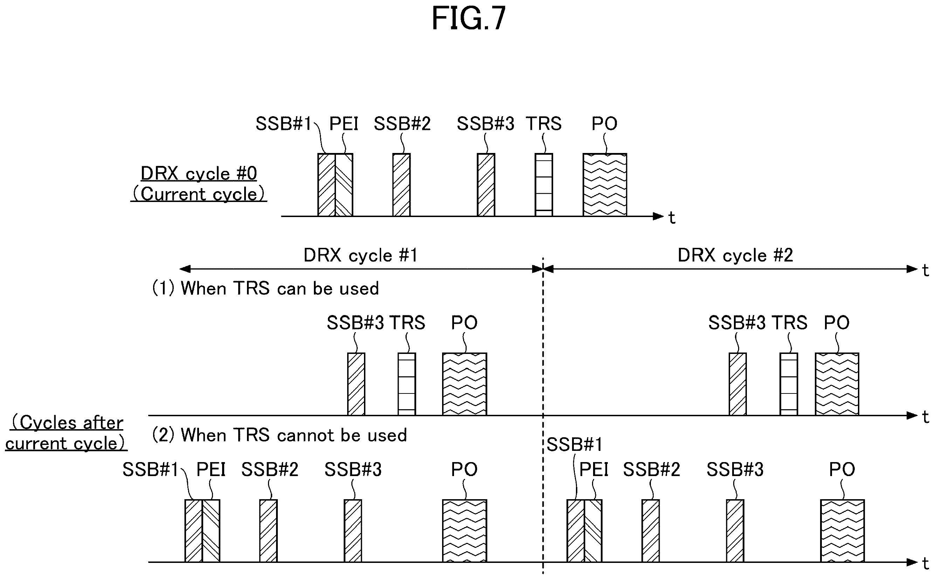

An operation example will be described with reference to the upper part of FIG. 7. The terminal 20 receives a PEI in a DRX cycle #0, which is the current cycle in which the terminal 20 detects the PEI. The PEI notifies the terminal 20 of availability of only a TRS immediately before a PO in the DRX cycle #0. The TRS for which the PEI notifies of the availability may be any TRS between the PEI and the PO in the DRX cycle #0.

If the PEI is used to notify that the TRS is available and the PEI includes a Wake up instruction, the terminal 20 receives the TRS and performs monitoring using in the PO. If the PEI notifies of unavailability of the TRS, the terminal 20 does not receive the TRS (does not perform operation of detecting the TRS).

### <Option 2 of Example 1-1>

In option 2, by a PEI, the terminal 20 is notified of availability of TRS(s) from a DRX cycle in which the terminal 20 receives the PEI until after xx DRX cycles. That is, the base station transmits the TRS including information indicating the availability of TRS(s) from a DRX cycle in which the base station 10 transmits the PEI until after xx DRX cycles.

The value of xx may be configured in the terminal 20 in advance, or may be notified from the base station 10 to the terminal 20 by, for example, a SIB, a DCI, a MAC CE, an RRC signaling, or the like.

Here, an operation example of the terminal 20 in a case where xx=2, for example, will be described with reference to FIG. 7. The terminal 20 receives the PEI in the DRX cycle #0. The PEI notifies of availability of a TRS in DRX cycle #0, availability of a TRS in DRX cycle #1, and availability of a TRS in DRX cycle #2, and thus the terminal 20 performs an operation according to the availability of each of the TRS.

An operation example when a TRS in DRX cycle #1 is available and a TRS in DRX cycle #2 is available will be described with reference to the middle part of FIG. 7. In this case, the terminal 20 receives a TRS in both of DRX cycle #1 and DRX cycle #2.

An operation example when any TRS in DRX cycle #1 is unavailable and any TRS in DRX cycle #2 is unavailable will be described with reference to the lower part of FIG. 7. In this case, the terminal 20 does not receive any TRS in either DRX cycle #1 or DRX cycle #2. In this case, for example, the terminal 20 receives an SSB and performs monitoring in a PO.

In the present embodiment (Examples 1 and 2), availability of a TRS may be notified by a PEI, and a wake-up instruction in a PO may be notified by the PEI. Alternatively, a PEI for notifying only availability of a TRS and a PEI for notifying only the wake-up instruction in the PO may be separately present.

### <Example 1-2>

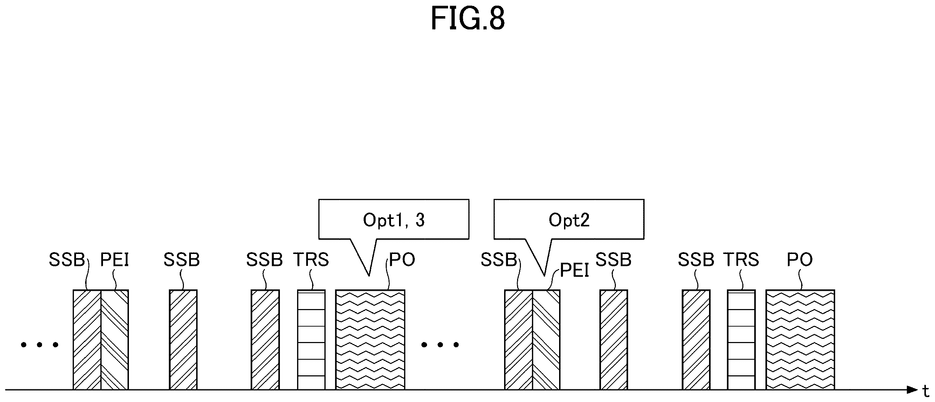

In Example 1-2, in a case where the base station 10 notifies the terminal 20 of a wake-up instruction in a PO of a certain DRX cycle by a PEI of the DRX cycle, a method of notifying of availability of a TRS in the next DRX cycle (or the next DRX cycle and thereafter) will be described. The notification method includes the following options 1 to 3, and each of the options will be described with reference to FIG. 8 as appropriate. In FIG. 8, the terminal 20 in options 1 and 3 receives a notification signal in a PO indicated by Opt (Option) 1, 3, and the terminal in option 2 receives a PET indicated by Opt2.

The terminal 20 assumes any one or more of options 1 to 3 and performs the terminal operation.

### <Option 1 of Example 1-2>

In option 1, the terminal 20 assumes that, by a paging DCI received in a PO in a current DRX cycle in which a PEI is received, availability of a TRS of the next DRX cycle (or the next DRX cycle or later DRX cycle) is notified. That is, in option 1, the base station 10 can notify, by a paging DCI in a current DRX cycle in which a PEI is transmitted, the terminal 20 of availability of a TRS of the next DRX cycle (or the next DRX cycle or later).

For example, in FIG. 8, the terminal 20 monitors a PO in the current DRX cycle and receives a paging DCI to determine availability of a TRS in the next DRX cycle (or the next DRX cycle or later).

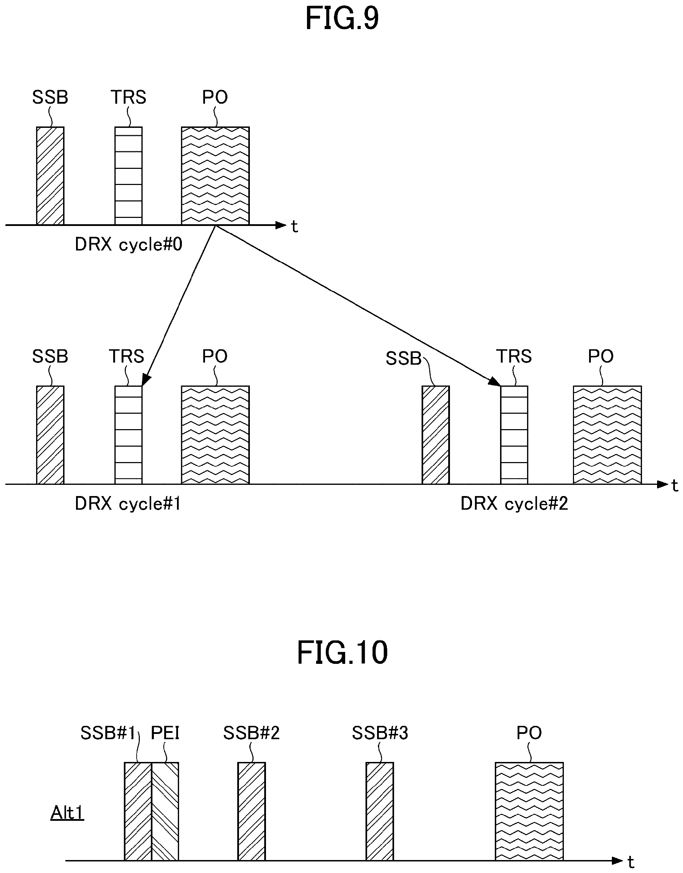

Further, when availability of a TRS is notified by a paging DCI as in the option 1, availability of a TRS for designated xx DRX cycles may be indicated as in the Example 1-1. An example is shown in FIG. 9. In the example of FIG. 9, by a paging DCI received in a PO of DRX cycle #0, availability of a TRS in DRX cycle #1 and DRX cycle #2 is notified.

The above designation by xx is an example. The terminal 20 may determine availability of a TRS for one or more DRX cycles by using a timer. For example, the timer starts from a certain time (e.g., start of a DRX cycle), then, according to a timer time (e.g., a time until the timer expires) at the time when the terminal 20 receives a paging DCI, the terminal 20 may determine DRX cycles in which availability of a TRS is notified (how many DRX cycles the availability of the TRS is notified for).

For example, the timer time may be associated with a bit value (ID), and it may be determined that availability of a TRS of the number of DRX cycles corresponding to the bit value is notified. The combinations of the timer time and the bit value may be stored in a table, and the terminal 20 may store the table therein and determine the bit value based on the table. The base station 10 may notify the terminal 20 of the timer time (initial value).

Note that determining the number of DRX cycles for which availability of a TRS is notified using the timer as described above may be applied to option 2 of Example 1-1.

### <Option 2 of Example 1-2>

In option 2, the terminal 20 assumes that, by a PEI in the next DRX cycle (or the next DRX cycle or later) of a current DRX cycle in which a PEI is received, availability of a TRS of the next DRX cycle (or the next DRX cycle or later) is notified. That is, in option 2, the base station 10 can notify, by a PEI in the next DRX cycle (or the next DRX cycle or later) of a current DRX cycle in which a PEI is transmitted, the terminal 20 of availability of a TRS of the next DRX cycle (or the next DRX cycle or later).

For example, in FIG. 8, the terminal 20 receives a PEI of a DRX cycle next to the current DRX cycle in which a PEI is received, and thereby determines availability of a TRS of the next DRX cycle (or the next DRX cycle or later).

### <Option 3 of Example 1-2>

In option 3, the terminal 20 assumes that, by a SIB (System Information Block) received in a PO in a current DRX cycle in which a PEI is received, availability of a TRS of the next DRX cycle (or the next DRX cycle or later) is notified. That is, in option 3, the base station 10 can notify, by a SIB in a current DRX cycle in which a PEI is transmitted, the terminal 20 of availability of a TRS of the next DRX cycle (or the next DRX cycle or later).

For example, in FIG. 8, the terminal 20 monitors a PO in the current DRX cycle and receives a SIB, then, determines availability of a TRS in the next DRX cycle (or the next DRX cycle or later).

Also, even when notification is made by a SIB, as shown in FIG. 9, availability for the designated xx DRX cycles may be indicated. The method using the timer described in the option 1 of Example 1-2 may be applied to the case of performing notification by the SIB.

Further, the SIB to be used is not limited to a specific SIB. The SIB to be used may be SIB1, SIB2, or a SIB that is not defined in the existing specification. Further, MIB may be used instead of the SIB.

### <Example 1-2: Operation Switching>

Regarding switching from an operation of determining availability of a TRS by a PEI to an operation of determining availability of a TRS by a paging DCI, a SIB, or the like received in a PO as in the above-described options 1 and 3, the terminal 20 may determine to use notification in a PO when detecting that one or both of the following operation selection criteria (1) and (2) are satisfied.

(1) The number of consecutive wake-up instructions by a PEI exceeds a threshold.
(2) The group paging rate in a PO exceeds a threshold (or falls below a threshold).

With regard to (1), when the condition (1) is satisfied, since wake up in a PO is frequently performed, it is effective to use a signal received by a PO instead of the PEI. Regarding (2), when the condition (2) is satisfied, the possibility of receiving a paging in a PO increases, and therefore it is effective to use a paging DCI received in a PO instead of a PEI.

Any one of the above options 1 to 3 may be carried out, or any combination (or all) of the options may be carried out. In addition, one or more of the terminal operations of the options 1 to 3 and the threshold may be configured in the terminal 20 in advance, or may be configured or changed from the base station 10 to the terminal 20. As a method of notification from the base station 10, for example, a SIB, a DCI, a MAC CE, an RRC signaling, or the like can be used.

### <Example 1-3>

Example 1-3 is a detailed example for the case of option 1 in Example 1-2. As described before, in the option 1 in Example 1-2, the terminal 20 determines, by a paging DCI in a current DRX cycle in which a PEI is received, availability of a TRS of the next DRX cycle (or the next DRX cycle or later). The terminal 20 performs the following Alt1 operation or Alt2 operation according to the result of the availability of the TRS determined by the paging DCI. The Example 1-3 may be applied to a case of the option 3 in the Example 1-2 (a case of using a SIB).

Also, when availability of a TRS of a plurality of DRX cycles is notified by a paging DCI, the following Alt1 and Alt2 may be performed in each DRX cycle in which availability of a TRS is notified.

### <Alt1 of Example 1-3>

Alt1 is an operation in a case when the terminal 20 determines that a TRS is unavailable by a paging DCI. In this case, the terminal 20 monitors a PEI in a DRX cycle next to a current DRX cycle in which the paging DCI is received (example: the terminal 20 monitors the PEI illustrated in FIG. 10).

When availability of a TRS in a paging DCI is different from availability of a TRS in a PEI in the next and subsequent DRX cycles, the difference can be detected by monitoring a PEI as described above.

### <Alt2 of Example 1-3>

Alt2 is an operation performed when the terminal 20 determines that a TRS is available. In this case, the terminal 20 performs one of the following Alt2-1 and Alt2-2.

### <Alt2-1>

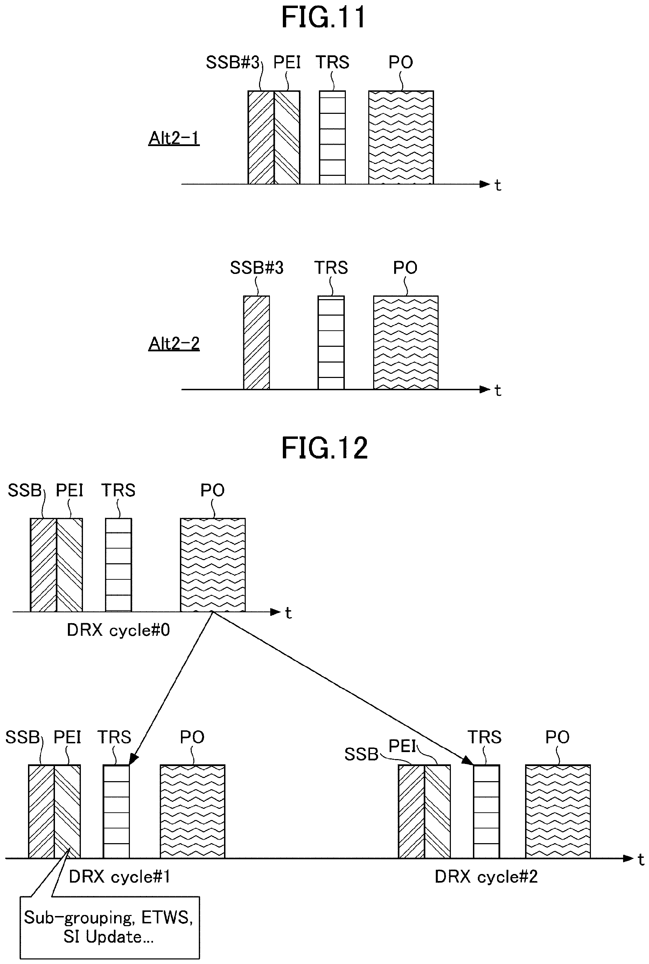

In Alt2-1, the terminal 20 monitors a PEI in a DRX cycle next to a current DRX cycle in which a paging DCI is received. This PEI is shown as a PEI in the timeline of Alt2-1 in FIG. 11.

The resource position of the PEI in this case may be configured in the terminal 20 in advance, or may be notified or changed from the base station 10 to the terminal 20.

For example, when it is determined that a TRS is available by a paging DCI, the time position of the resource of the PEI may be configured in advance to be immediately after SSB #3. Here, SSB #3 is an SSB immediately before a PO in the DRX cycle (closest in time to the PO). The reason for this is that, since it is known that a TRS can be received, sufficient synchronization can be established by performing SSB reception once + TRS reception. Thus, second and third SSBs can be skipped, and useless activation can be reduced, and power consumption can be reduced.

Further, the base station 10 may notify the terminal 20 of whether or not the PEI resource is configured immediately after the SSB #3 by a paging DCI in the option 1 in the Example 1-2.

By receiving a PEI as in the Alt2-1, the terminal 20 can determine whether to wake up at a PO based on the PEI.

### <Alt2-2>

In Alt2-2, the terminal 20 does not monitor a PEI in a DRX cycle next to a current DRX cycle in which a paging DCI is received. This situation is illustrated in the absence of a PEI in the timeline of Alt2-2 in FIG. 11. In this case, for example, the terminal 20 receives a TRS and wakes up at a PO.

### <Operation Selection>

Which operation of the Alt2-1 and the Alt2-2 to perform by the terminal 20 may be configured in advance in the terminal 20, or may be notified or changed from the base station 10 to the terminal 20. Which operation to perform by the terminal 20 may depend on implementation of each terminal 20.

As a notification method in a case where the base station 10 notifies (or changes) the terminal 20 of an operation, for example, a SIB, a DCI, a MAC CE, or an RRC signaling can be used.

The terminal 20 may select an operation to perform from the Alt2-1 and the Alt2-2 by comparing a parameter serving as a criterion of determination with a threshold.

As the parameter of the criterion, one or more of {Group Paging Rate in a PO, mobility of the terminal 20, location information of the terminal 20, UE category of the terminal 20, UE type of the terminal 20} may be used.

For example, when the Group Paging Rate exceeds a threshold and the possibility of receiving a paging is high, paging monitoring in a PO may be performed without monitoring a PEI.

The threshold of the parameter may be configured in the terminal 20 in advance, or may be notified or changed from the base station 10 to the terminal 20. As a notification method in a case where the threshold is notified (or changed) from the base station 10 to the terminal 20, for example, a SIB, a DCI, a MAC CE, or an RRC signaling can be used.

### <Example 1-3: designation of use by a PEI>

In the above-described Att1 and Alt2, when the terminal 20 receives a PEI in a DRX cycle designated by a paging DCI, the terminal 20 may perform an operation for another purpose based on bits (a plurality of bits) used for availability of a TRS in a PEI.

For example, when the base station 10 notifies the terminal 20 of 2 bits by a PEI, it is assumed that the base station 10 notifies the terminal 20 of availability for a first DRX cycle by one bit of the bits and notifies the terminal 20 of availability for a second DRX cycle by another bit.

In this case, in a DRX cycle after availability of a TRS is notified to the terminal 20, the 2 bits are used for notification for different use in the DRX cycle. For example, the terminal 20 may determine that one bit is for notification of ETW and another bit is for notification of Sib Update and the like.

An example is shown in FIG. 12. In the example of FIG. 12, by a paging DCI received in DRX cycle #0, availability of a TRS for each of DRX cycle #1 and DRX cycle #2 is notified. At this time, the terminal 20 receives a PEI in the DRX cycles #1 and #2, interprets a bit for notification of availability of a TRS in the PEI as a bit for notification of different use, and performs determination or operation according to a value of the bit. For example, if the bit interpreted as a bit for ETWS is ON, an operation in the case of receiving an emergency alert is performed.

According to the Example 1 described above, the terminal operation when a PEI is detected is clarified, and the power consumption reduction effect of the terminal 20 can be improved.

### (Example 2)

In Example 2, an operation example of the terminal 20 when a PEI cannot be detected will be described. The Example 2 is divided into Examples 2-1 to 2-3, and each of them will be described. The case where a PEI cannot be detected means that a PEI cannot be detected in a case where an operation of monitoring a PEI is performed. The case of performing the operation of monitoring the PEI includes not only the case of performing the operation of monitoring the PEI in the Example 1 but also includes other cases.

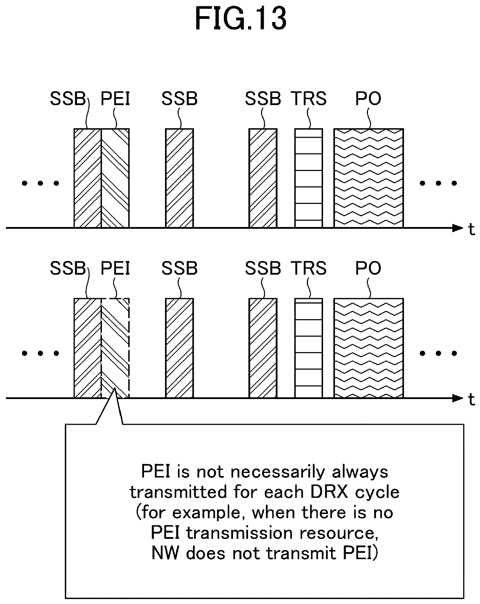

FIG. 13 is a diagram for explaining an example of a case where a PEI cannot be detected. In the example illustrated in the upper part of FIG. 13, the PEI is transmitted from the base station 10. In this case, for example, when the radio state is deteriorated, the terminal 20 may be unable to detect the PEI.

In the example shown in the lower part of FIG. 13, the terminal 20 monitors the PEI for each DRX cycle in accordance with, for example, configuration information of DRX cycles, but a PEI is not necessarily transmitted for each DRX cycle. For example, when there is no resource for PEI transmission, the base station 10 does not transmit a PEI. In this case, the terminal 20 cannot detect the PEI at an expected timing.

### <Example 2-1>

When the terminal 20 cannot detect a PEI, the terminal 20 executes any one of operations described in the following options 1 to 3.

Which operation of the options 1 to 3 to perform may be configured in advance in the terminal 20, may be notified or changed from the base station 10 to the terminal 20, or may depend on implementation of each terminal 20.

As a notification method in a case where the base station 10 performs notification (or changes) to the terminal 20, for example, a SIB, a DCI, a MAC CE, or an RRC signaling can be used.

### <Example 2-1: Option 1>

When the terminal 20 cannot detect a PEI of a certain DRX cycle, the terminal 20 assumes that a TRS of the DRX cycle is available, skips reception of the subsequent SSB, completes synchronization establishment by the TRS, and wakes up at a PO of the DRX cycle. This example is assumed to be an example of a case where the base station 10 transmits the TRS when the base station 10 does not transmit the PEI.

### <Example 2-1: Option 2>

When the terminal 20 cannot detect a PEI of a certain DRX cycle, the terminal 20 assumes that a TRS of the DRX cycle is unavailable, and establishes synchronization by receiving a subsequent SSB. That is, the synchronization establishment is completed only by the SSB, and the terminal wakes up in a PO of the DRX cycle.

### <Example 2-1: Option 3>

If the terminal 20 cannot detect a PEI of a certain DRX cycle, the terminal 20 does not wake up at a PO of the DRX cycle. That is, the terminal 20 does not receive the subsequent SSB and TRS and skips them.

### <Example 2-2>

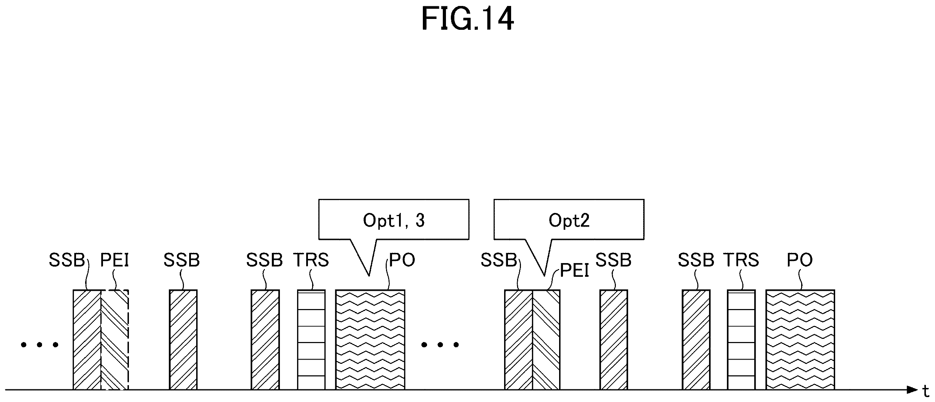

In Example 2-2, in a case where the terminal 20 cannot detect a PEI in a DRX cycle, a method of notification of availability of a TRS of the next DRX cycle (or the next DRX cycle or later) of the DRX cycle will be described. The notification method includes the following options 1 to 3, and each of the options will be described with reference to FIG. 14 as appropriate. In FIG. 14, the terminal 20 in Opt (option) 1 and 3 receive a notification signal at a PO indicated by Opt1 and 3, and the terminal 20 in Opt2 receive a PEI indicated by Opt2.

The terminal 20 assumes any one or any plurality of options 1 to 3 and performs terminal operation.

### <Option 1 of Example 2-2>

In option 1, the terminal 20 assumes that, by a paging DCI in a current DRX cycle in which a PEI cannot be detected, availability of a TRS of the next DRX cycle (or the next DRX cycle or later) is notified. That is, in option 1, the base station 10 can notify the terminal 20, by a paging DCI in a current DRX cycle, of availability of a TRS of the next DRX cycle (or the next DRX cycle or later).

For example, in FIG. 14, the terminal 20 monitors a PO in the current DRX cycle and receives a paging DCI, and determines availability of a TRS in the next DRX cycle (or the next DRX cycle or later).

Further, as in option 1 of Example 1-2, as shown in FIG. 9, availability for designated DRX cycles may be indicated.

### <Option 2 of Example 2-2>

In option 2, the terminal 20 assumes that, by a PEI in the next DRX cycle (or the next DRX cycle or later) of a current DRX cycle in which a PEI cannot be detected, the terminal 20 is notified of availability of a TRS of the next DRX cycle (or the next DRX cycle or later). That is, in option 2, the base station 10 can notify, by a PEI in the next DRX cycle (or the next DRX cycle or later) of a current DRX cycle, the terminal 20 of availability of a TRS of the next DRX cycle (or the next DRX cycle or later).

For example, in FIG. 14, the terminal 20 receives a PEI of a DRX cycle next to the current DRX cycle in which a PEI cannot be detected, and thereby determines availability of a TRS of the next DRX cycle.

### <Option 3 of Example 2-2>

In option 3, the terminal 20 assumes that, by a SIB received at a PO in a current DRX cycle in which a PEI cannot be detected, the terminal 20 is notified of availability of a TRS of the next DRX cycle (or the next DRX cycle or later). That is, in option 3, the base station 10 can notify, by a SIB in a current DRX cycle, the terminal 20 of availability of a TRS of the next DRX cycle (or the next DRX cycle or later).

For example, in FIG. 14, the terminal 20 monitors a PO in a current DRX cycle and receives a SIB, and determines availability of a TRS in the next DRX cycle (or the next DRX cycle or later).

Also, even when the notification is made by a SIB, as shown in FIG. 9, availability for the designated xx DRX cycles may be indicated.

Further, a SIB to be used is not limited to a specific SIB. The SIB to be used may be SIB1, SIB2, or a SIB that is not defined in the existing specification. Further, MIB may be used instead of the SIB.

### <Example 2-3>

When notification of availability of a TRS is performed by a PEI, the TRS availability notification method may be switched from the PEI to a paging DCI or a SIB. The "switching" may mean switching from a state of carrying out the option 2 to a state of carrying out the option 1 or option 3.

For example, the terminal 20 may determine switching and transmit a switching instruction to the base station 10, or the base station 10 may transmit a switching instruction to the terminal 20.

An example of a switching criterion will be described. For example, when the terminal 20 cannot continuously detect a PEI a threshold number of times or more, the terminal 20 switches the TRS availability notification method from the PEI to a paging DCI or a SIB. For example, when the PEI is switched to the paging DCI, the terminal 20 determines availability of a TRS by monitoring the paging DCI without monitoring the PEI.

The above-described criterion, threshold, and the like may be configured in the terminal 20 in advance, or may be notified or changed from the base station 10 to the terminal 20.

As a notification method in a case where the base station 10 performs notification to the terminal 20, for example, a SIB, a DCI, a MAC CE, or an RRC signaling can be used.

According to the Example 2 described above, terminal operation when a PEI cannot be detected becomes clear, and the power consumption reduction effect of the terminal 20 can be improved.

### (Other Examples)

In the Examples 1 and 2 described above, the number of SSBs used for reception may be three or more. In the description of the Examples 1 and 2, a timeline using three SSBs at the maximum is used as an example.

In the Examples 1 and 2 described above, when the base station 10 notifies the terminal 20 of information on availability of a TRS by both a PEI and a paging DCI and the information on availability is different, the terminal 20 may perform any one of the following (1) to (3).

(1) Information of the PEI (or the paging DCI) is prioritized.
(2) The latest information on availability of a TRS is prioritized.
(3) If the availability notifications are different, the terminal 20 recognizes that a TRS is always available (or that a TRS is not available).

Which operation of (1) to (3) to perform may be configured in advance in the terminal 20, or may be notified or changed from the base station 10 to the terminal 20. Which operation to perform by the terminal 20 may depend on the implementation of each terminal 20.

As a notification method in a case where the base station 10 notifies (or changes) the terminal 20 of an operation, for example, a SIB, a DCI, a MAC CE, or an RRC signaling can be used. Further, the "paging DCI" described above (and below) may be replaced with "SIB".

Here, the operation of (2) will be described more specifically using the following first to third examples.

First example: It is assumed that "TRS is available in DRX cycles #1 to #3" is notified in a PO of DRX cycle #0. Here, when a PEI of DRX cycle #1 reports that "TRS cannot be used from #2 to #3", the PEI of DRX cycle #1 is the latest information, and therefore, this is prioritized.

Second example: It is assumed that the terminal 20 is notified of "TRS can be used in DRX cycles #1 to #3" by a PEI of DRX cycle #0. Here, when the terminal 20 is notified of "TRS cannot be used from #1 to #3" by an immediately subsequent PO (PO of #0), the PO is the latest information, and thus this is prioritized.

Third example: When the terminal 20 is notified of "TRS can be used from #1 to #3" by a PEI of DRX cycle #0 and notified of "TRS cannot be used from #2 to #3" by a PO (paging DCI) of DRX cycle #1, the information of the paging DCI received later is prioritized to determine that TRS cannot be used.

### (Apparatus Configuration)

Next, functional configuration examples of the base station 10 and the terminal 20 that execute the processes and operations described above will be described. The base station 10 and the terminal 20 include functions for carrying out Examples 1 and 2 described above. However, each of the base station 10 and the terminal 20 may include only a function of any one of the Examples 1 and 2.

### <Base Station 10>

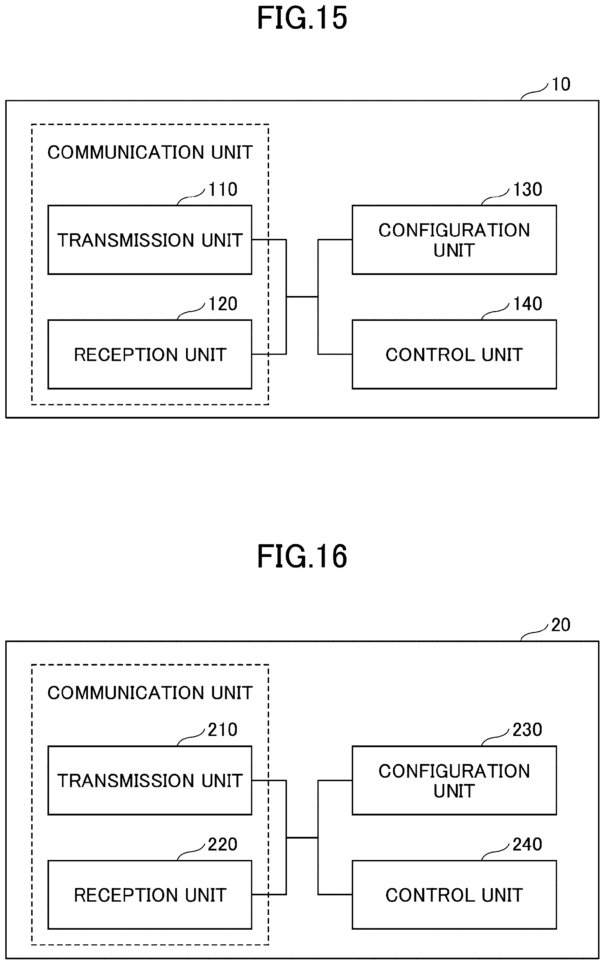

FIG. 15 is a diagram illustrating an example of a functional configuration of the base station 10. As illustrated in FIG. 15, the base station 10 includes a transmission unit 110, a reception unit 120, a configuration unit 130, and a control unit 140. The functional configuration illustrated in FIG. 15 is merely an example. The functional sections and the names of the functional units may be any as long as the operations according to the embodiment of the present invention can be executed. The transmission unit 110 and the reception unit 120 may be referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting an NR-PSS, an NR-SSS, an NR-PBCH, the DL / UL control signal, the DL data, and the like to the terminal 20. The transmission unit 110 transmits a notification (an instruction) described in Examples 1 to 5 to the terminal 20.

The configuration unit 130 stores configuration information configured in advance and various kinds of configuration information to be transmitted to the terminal 20 in a storage device, and reads the configuration information from the storage device as necessary.

The control unit 140 performs, for example, resource allocation, overall control of the base station 10, and the like. Note that the functional units related to signal transmission in the control unit 140 may be included in the transmission unit 110, and the functional units related to signal reception in the control unit 140 may be included in the reception unit 120. The transmission unit 110 and the reception unit 120 may be referred to as a transmitter and a receiver, respectively.

### <Terminal 20>

FIG. 16 is a diagram illustrating an example of a functional configuration of the terminal 20. As illustrated in FIG. 16, the terminal 20 includes a transmission unit 210, a reception unit 220, a configuration unit 230, and a control unit 240. The functional configuration shown in FIG. 16 is merely an example. The functional sections and the names of the functional units may be any as long as the operations according to the embodiment of the present invention can be executed. The transmission unit 210 and the reception unit 220 may be referred to as a communication unit.

The transmission unit 210 generates a transmission signal from transmission data and transmits the transmission signal by radio. The reception unit 220 receives various signals by radio and acquires a signal of a higher layer from the received signal of the physical layer.

The configuration unit 230 stores various types of configuration information received from the base station 10 by the reception unit 220 in the storage device, and reads the configuration information from the storage device as necessary. The configuration unit 230 also stores configuration information configured in advance. The content of the configuration information is, for example, information necessary for the operation described in the Examples 1 and 2.

The control unit 240 performs control related to paging monitoring based on information received from the base station 10. Note that the functional units related to signal transmission in the control unit 240 may be included in the transmission unit 210, and the functional units related to signal reception in the control unit 240 may be included in the reception unit 220. The transmission unit 210 and the reception unit 220 may be referred to as a transmitter and a receiver, respectively.

According to the present embodiment, at least a terminal described in each of the following items is provided, for example.

### (Item 1)

A terminal including:
a reception unit configured to detect a paging advance notification signal; and
a control unit configured to determine, based on the paging advance notification signal, availability of a reference signal for synchronization in each discontinuous reception cycle of one or more discontinuous reception cycles.

### (Item 2)

A terminal including:
a reception unit configured to detect a paging advance notification signal indicating activation in a paging occasion of a first discontinuous reception cycle; and
a control unit configured to determine, based on a signal received in the paging occasion, availability of a reference signal for synchronization in a second discontinuous reception cycle after the first discontinuous reception cycle.

### (Item 3)

The terminal as described in item 2,
wherein, when the control unit determines that the reference signal for synchronization is unavailable in the second discontinuous reception cycle based on the signal received in the paging occasion, the reception unit monitors a paging advance notification signal in the second discontinuous reception cycle.

### (Item 4)

The terminal as described in item 2,
wherein, when the control unit determines that the reference signal for synchronization is available in the second discontinuous reception cycle based on the signal received in the paging occasion, the reception unit monitors a paging advance notification signal at a time position after a synchronization signal in the second discontinuous reception cycle.

### (Item 5)

A terminal including:
a reception unit configured to monitor a paging advance notification signal; and
a control unit configured to, when the reception unit cannot detect the paging advance notification signal, determine that, based on configuration, a reference signal for synchronization is available, or that a reference signal for synchronization is unavailable.

### (Item 6)

A terminal including:
a reception unit configured to monitor a paging advance notification signal in a first discontinuous reception cycle; and
a control unit configured to, when the reception unit cannot detect the paging advance notification signal, determine, based on a signal received in a paging occasion of the first discontinuous reception cycle, availability of a reference signal for synchronization in a second discontinuous reception cycle after the first discontinuous reception cycle.

According to any of items 1 to 6, it is possible to appropriately reduce the power consumption of the terminal in monitoring of paging. According to items 3 and 4, it is possible to cope with a case where there is a change in the situation of availability of a reference signal for synchronization can be used.

### (Hardware Configuration)

The block diagrams (FIG. 15 and FIG. 16) used in the description of the embodiment described above illustrate the block of functional unit. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

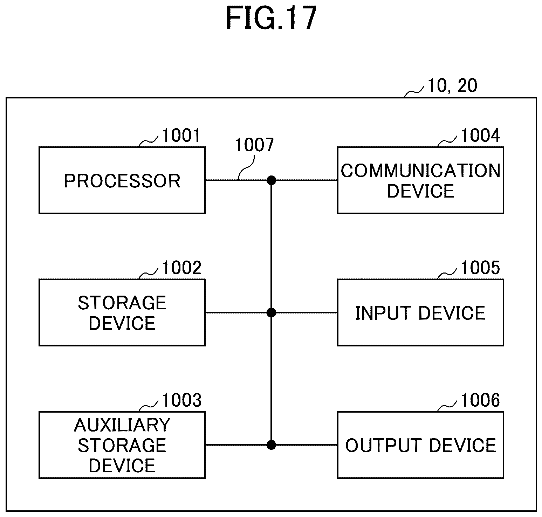

For example, the base station 10, the terminal 20, and the like in one embodiment of this disclosure may function as a computer for performing the processing of a radio communication method of this disclosure. FIG. 17 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. For example, the control unit 140 of the base station 10 illustrated in FIG. 15 may be attained by a control program that is stored in the storage device 1002 and is operated by the processor 1001. In addition, for example, the control unit 240 of the terminal 20 illustrated in FIG. 16 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage device 1003 may be referred to as an auxiliary storage unit. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

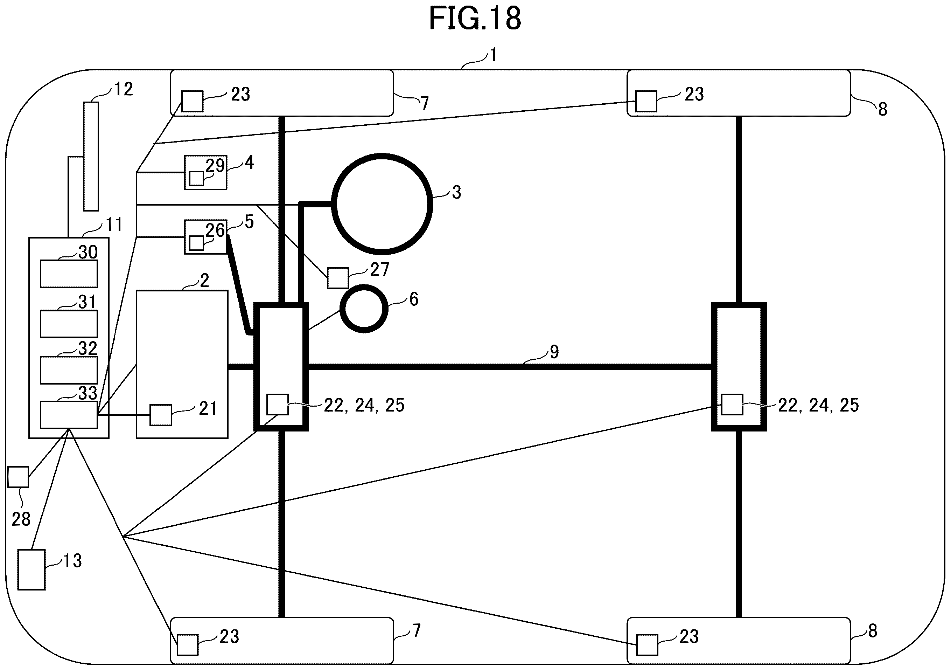

The terminal 20 or the base station 10 may be provided in a vehicle 1. FIG. 18 shows a configuration example of the vehicle 1.

As shown in FIG. 18, the vehicle 1 includes a drive unit 2, a steering unit 3, an accelerator pedal 4, a brake pedal 5, a shift lever 6, front wheels 7 of left and right, rear wheels 8 left and right, an axle 9, an electronic control unit 11, various sensors 21-29, an information service unit 12, and a communication module 13.

The drive unit 2 may include, for example, an engine, a motor, and a hybrid of an engine and a motor. The steering unit 3 includes at least a steering wheel and is configured to steer at least one of the front wheel and the rear wheel, based on the operation of the steering wheel operated by the user.

The electronic control unit 11 includes a microprocessor 31, a memory (ROM, RAM) 32, and a communication port (IO port) 33. The electronic control unit 11 receives signals from the various sensors 21-27 provided in the vehicle. The electronic control unit 11 may be referred to as an ECU (Electronic control unit).

The signals from the various sensors 21 to 28 include a current signal from a current sensor 21 which senses the current of the motor, a front or rear wheel rotation signal acquired by a revolution sensor 22, a front or rear wheel pneumatic signal acquired by a pneumatic sensor 23, a vehicle speed signal acquired by a vehicle speed sensor 24, an acceleration signal acquired by an acceleration sensor 25, a stepped-on accelerator pedal signal acquired by an accelerator pedal sensor 29, a stepped-on brake pedal signal acquired by a brake pedal sensor 26, an operation signal of a shift lever acquired by a shift lever sensor 27, and a detection signal, acquired by the object detection sensor 28, for detecting an obstacle, a vehicle, a pedestrian, and the like.

The information service unit 12 includes various devices for providing various kinds of information such as driving information, traffic information, and entertainment information, including a car navigation system, an audio system, a speaker, a television, and a radio, and one or more ECUs controlling these devices. The information service unit 12 provides various types of multimedia information and multimedia services to the occupants of the vehicle 1 by using information obtained from the external device through the communication module 13 or the like.

A driving support system unit 30 includes: various devices for providing functions of preventing accidents and reducing driver' s operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 30 transmits and receives various types of information via the communication module 13 to realize a driving support function or an autonomous driving function.

The communication module 13 may communicate with the microprocessor 31 and components of the vehicle 1 via a communication port. For example, the communication module 13 transmits and receives data via the communication port 33, to and from the drive unit 2, the steering unit 3, the accelerator pedal 4, the brake pedal 5, the shift lever 6, the front wheels 7 of left and right, the rear wheels 8 of left and right, the axle 9, the microprocessor 31 and the memory (ROM, RAM) 32 in the electronic control unit 11, and sensors 21-28 provided in the vehicle 1.

The communication module 13 is a communication device that can be controlled by the microprocessor 31 of the electronic control unit 11 and that is capable of communicating with external devices. For example, various kinds of information are transmitted to and received from external devices through radio communication. The communication module 13 may be internal to or external to the electronic control unit 11. The external devices may include, for example, a base station, a mobile station, or the like.

The communication module 13 transmits a current signal, which is input to the electronic control unit 11 from the current sensor, to the external devices through radio communication. In addition, the communication module 13 also transmits, to the external devices through radio communication, the front or rear wheel rotation signal acquired by the revolution sensor 22, the front or rear wheel pneumatic signal acquired by the pneumatic sensor 23, the vehicle speed signal acquired by the vehicle speed sensor 24, the acceleration signal acquired by the acceleration sensor 25, the stepped-on accelerator pedal signal acquired by the accelerator pedal sensor 29, the stepped-on brake pedal signal acquired by the brake pedal sensor 26, the operation signal of the shift lever acquired by the shift lever sensor 27, and the detection signal, acquired by the object detection sensor 28, for detecting an obstacle, a vehicle, a pedestrian, and the like, that are input to the electronic control unit 11.

The communication module 13 receives various types of information (traffic information, signal information, inter-vehicle information, etc.) transmitted from the external devices and displays the received information on the information service unit 12 provided in the vehicle 1. In addition, the communication module 13 stores the various types of information received from the external devices in the memory 32 available to the microprocessor 31. Based on the information stored in the memory 32, the microprocessor 31 may control the drive unit 2, the steering unit 3, the accelerator pedal 4, the brake pedal 5, the shift lever 6, the front wheels 7 of left and right, the rear wheels 8 of left and right, the axle 9, the sensors 21-28, etc., mounted in the vehicle 1.

The terminal 20 or the base station 10 described in the present embodiment may be used as the communication module 13.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G), xth generation mobile communication system (xG) (x is an integer or decima, for example), future radio access (FRA), new radio (NR), new radio access (NX), future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the terminal in this disclosure may be replaced with the base station. In this case, the function of the user terminal described above may be provided in the base station.

The terms "determining" and "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe.

Here, TTI, for example, indicates minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a subcarrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

In the present disclosure, the SS block or CSI-RS is an example of a synchronization signal or reference signal.

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### Description of Symbols

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a reception unit configured to detect a paging advance notification signal; and
a control unit configured to determine, based on the paging advance notification signal, availability of a reference signal for synchronization in each discontinuous reception cycle of one or more discontinuous reception cycles.

2. A terminal comprising:
a reception unit configured to detect a paging advance notification signal indicating activation in a paging occasion of a first discontinuous reception cycle; and
a control unit configured to determine, based on a signal received in the paging occasion, availability of a reference signal for synchronization in a second discontinuous reception cycle after the first discontinuous reception cycle.

3. The terminal as claimed in claim 2,
wherein, when the control unit determines that the reference signal for synchronization is unavailable in the second discontinuous reception cycle based on the signal received in the paging occasion, the reception unit monitors a paging advance notification signal in the second discontinuous reception cycle.

4. The terminal as claimed in claim 2,
wherein, when the control unit determines that the reference signal for synchronization is available in the second discontinuous reception cycle based on the signal received in the paging occasion, the reception unit monitors a paging advance notification signal at a time position after a synchronization signal in the second discontinuous reception cycle.

5. A terminal comprising:
a reception unit configured to monitor a paging advance notification signal; and
a control unit configured to, when the reception unit cannot detect the paging advance notification signal, determine that, based on a configuration, a reference signal for synchronization is available, or that a reference signal for synchronization is unavailable.

6. A terminal comprising:
a reception unit configured to monitor a paging advance notification signal in a first discontinuous reception cycle; and
a control unit configured to, when the reception unit cannot detect the paging advance notification signal, determine, based on a signal received in a paging occasion of the first discontinuous reception cycle, availability of a reference signal for synchronization in a second discontinuous reception cycle after the first discontinuous reception cycle.
